# EUROPÄISCHE PATENTSCHRIFT

(11) **EP 3 650 755 B1**
(45) Veröffentlichungstag und Bekanntmachung des Hinweises auf die Patenterteilung: **19.05.2021**
(21) Anmeldenummer: 19206393.1
(22) Anmeldetag: 31.10.2019
(51) Int. Cl.: F23D 3/40, F23C 99/00, F23Q 13/00, F23Q 7/08, F23Q 21/00, B60H 1/22

(54) **BRENNKAMMERBAUGRUPPE FÜR EIN FAHRZEUGHEIZGERÄT**
COMBUSTION CHAMBER MODULE FOR A VEHICLE HEATER
MODULE DE CHAMBRE DE COMBUSTION POUR CHAUFFAGE DE VÉHICULE

(30) Priorität: 08.11.2018 DE 102018127863
(43) Veröffentlichungstag der Anmeldung: 13.05.2020
(73) Patentinhaber: Eberspächer Climate Control Systems GmbH, 73730 Esslingen (DE)
(72) Erfinder: Keefer, Jörg, 71384 Weinstadt (DE)
(74) Vertreter: Ruttensperger Lachnit Trossin Gomoll

(56) Entgegenhaltungen:
- DE-A1-102004 002 246
- DE-A1-102013 218 847
- US-A1- 2015 102 115

## Beschreibung

Die vorliegende Erfindung betrifft eine Brennkammerbaugruppe für ein brennstoffbetriebenes Fahrzeugheizgerät.

Ein in einem Fahrzeug beispielsweise als Standheizung oder als Zuheizer einsetzbares brennstoffbetriebenes Fahrzeugheizgerät umfasst im Allgemeinen eine Brennkammerbaugruppe mit einer darin bereitgestellten Brennkammer. In die Brennkammer werden Verbrennungsluft und Brennstoff eingespeist, um ein zündfähiges Gemisch aus Verbrennungsluft und Brennstoff zu erzeugen.

Aus der US 2015/102115 A1 ist eine nach dem Prinzip sogenannter Verdampferbrenner arbeitende Brennkammerbaugruppe gemäß dem Oberbegriff des Anspruchs 1 bekannt. Bei einer derartigen Brennkammerbaugruppe wird der Brennstoff flüssig zugeführt und in einem aus porösem Material aufgebauten Verdampfermedium unter anderem durch Kapillarförderwirkung verteilt und an einer der Brennkammer zugewandten Seite des Verdampfermediums in Dampfform in die Brennkammer abgegeben. Um insbesondere in einer Startphase die Abgabe von Brennstoffdampf zu unterstützen, ist einem derartigen Verdampfermedium eine durch elektrische Erregung eines Heizleiters Wärme bereitstellende Heizeinrichtung zugeordnet. Ferner ist zum Starten der Verbrennung ein in Form eines Glühstifts bereitgestelltes Zündorgan vorgesehen, welches elektrisch erregt wird und dadurch beispielsweise in einem in der Brennkammer positionierten Bereich auf eine zum Zünden des Gemisches ausreichende Temperatur erwärmt wird.

Die DE 10 2013 218 847 A1 offenbart ein brennstoffbetriebenes Fahrzeugheizgerät, bei welchem in Abstand zu einem an einem Bodenbereich einer Brennkammerbaugruppe angeordneten porösen Verdampfermedium ein zum Zünden eines Gemisches aus Verbrennungsluft und Brennstoff erregbares Zündorgan sich in ei Brennkammer erstreckt.

Aus der DE 10 2004 002 246 A1 ist eine nach dem Prinzip eines Zerstäuberbrenners aufgebaute Brennkammerbaugruppe bekannt, bei welcher in Abstand zu einer den Brennstoff in eine Brennkammer abgebenden Zerstäuberlippe ein Glühstift sich zum Zünden eines Gemisches aus Verbrennungsluft und Brennstoff in eine Brennkammer erstreckt.

Es ist die Aufgabe der vorliegenden Erfindung, eine Brennkammerbaugruppe für ein brennstoffbetriebenes Fahrzeugheizgerät vorzusehen, bei welcher die zum Unterstützen der Brennstoffverdampfung oder/und zum Starten der Verbrennung vorzusehenden baulichen Maßnahmen technisch einfach, gleichwohl zuverlässig wirkend vorgesehen sind und die im Verbrennungsbetrieb ablaufende Verbrennung durch derartige bauliche Maßnahmen im Wesentlichen nicht beeinträchtigt ist.

Erfindungsgemäß wird diese Aufgabe gelöst durch eine Brennkammerbaugruppe für ein brennstoffbetriebenes Fahrzeugheizgerät gemäß Anspruch 1. Diese Brennkammerbaugruppe umfasst ein Brennkammergehäuse, eine in dem Brennkammergehäuse gebildete Brennkammer, ein vorzugsweise poröses Verdampfermedium zur Aufnahme von flüssigem Brennstoff und zur Abgabe von Brennstoffdampf in die Brennkammer, eine Heiz/Zünd-Anordnung zum Erwärmen des Verdampfermediums oder/und Zünden eines in der Brennkammer gebildeten Gemisches aus Brennstoff und Verbrennungsluft, wobei die Heiz/Zünd-Anordnung wenigstens eine Strahlungsquelle zur Abgabe elektromagnetischer Strahlung in die Brennkammer und wenigstens einen Absorptionskörper zur Absorption von in die Brennkammer abgegebener elektromagnetischer Strahlung umfasst, wobei eine Strahlungsquelle zur Abgabe elektromagnetischer Strahlung in die Brennkammer zur Abgabe von elektromagnetischer Strahlung mit einer Frequenz im Bereich von 300 MHz - 300 GHz ausgebildet ist.

Durch die Verwendung elektromagnetischer Strahlung und zumindest eines diese absorbierenden Absorptionskörpers wird es möglich, die zur Unterstützung der Verdampfung erforderliche Erwärmung bzw. die zum Zünden eines in der Brennkammer vorhandenen Gemisches aus Brennstoff und Verbrennungsluft erforderliche lokal sehr hohe Temperatur berührungsfrei im Bereich der Brennkammer bereitzustellen. D.h., es müssen keine in die Brennkammer führende elektrische Leitungen vorhanden sein, und diejenigen baulichen Maßnahmen, welche zur thermischen Wechselwirkung mit dem zu verdampfenden Brennstoff oder/und dem Gemisch aus Brennstoff und Verbrennungsluft vorzusehen sind, können hinsichtlich ihrer körperlichen Gestalt so bereitgestellt werden, dass sie einerseits für diese Wechselwirkung optimiert sind, andererseits die im Inneren der Brennkammer entstehende Strömung möglichst wenig beeinträchtigen.

Bei der erfindungsgemäß aufgebauten Brennkammerbaugruppe kann das Brennkammergehäuse eine eine Gehäuselängsachse umgebende und in Richtung der Gehäuselängsachse sich erstreckende Umfangswand und einen an die Umfangswand anschließenden und die Brennkammer in Richtung der Gehäuselängsachse begrenzenden Brennkammerboden umfassen. Das Verdampfermedium kann dabei den Brennkammerboden oder/und die Umfangswand an einer der Brennkammer zugewandten Seite wenigstens bereichsweise überdeckend angeordnet sein.

Insbesondere hinsichtlich der Unterstützung der Brennstoffabdampfung ist es besonders vorteilhaft, wenn das Verdampfermedium einen Absorptionskörper bereitstellt.

Alternativ oder zusätzlich kann vor allem zum Bereitstellen lokal hoher Temperaturen zum Starten der Verbrennung vorgesehen sein, dass in der Brennkammer in Abstand zu dem Verdampfermedium wenigstens ein einen Absorptionskörper bereitstellender Zündkörper vorgesehen ist. Ein derartiger Zündkörper kann dann in der Brennkammer vollständig von dem Gemisch aus Brennstoff und Verbrennungsluft umgeben sein und somit eine sehr effiziente thermische Wechselwirkung damit bereitstellen.

Zum Einkoppeln von elektromagnetischer Strahlung in die Brennkammer kann wenigstens eine Strahlungsquelle einen Sender und eine Einstrahleinheit zum Einstrahlen von von dem Sender abgegebener elektromagnetischer Strahlung in die Brennkammer umfassen.

Bei einer sowohl eine effiziente thermische Entkopplung eines Senders von den vergleichsweise hohen Temperaturen im Bereich der Brennkammer, als auch eine zuverlässige Einkopplung von elektromagnetischer Strahlung in die Brennkammer gewährleistenden Ausgestaltung kann die Einstrahleinheit ein Hohlrohr umfassen, wobei das Hohlrohr zur Abgabe der vom Sender abgegebenen elektromagnetischen Strahlung in die Brennkammer offen ist. Der Umstand, dass ein derartiges Hohlrohr zur Abgabe von elektromagnetischer Strahlung in die Brennkammer offen ist, bedeutet gleichwohl nicht, dass dieses den Austritt von Verbrennungsabgas oder in der Brennkammer gebildetem Gemisch aus Brennstoff und Verbrennungsluft in Richtung zu dem mit diesem Hohlrohr zusammenwirkenden Sender zulässt. Ein derartiges Hohlrohr kann somit grundsätzlich mit für die vom Sender abgegebene elektromagnetische Strahlung durchlässigen baulichen Maßnahmen, wie zum Beispiel einem aus Quarzglas oder dergleichen aufgebauten Abschlusselement, gegen den Austritt von Verbrennungsabgas oder dergleichen in Richtung zum Sender hin abgeschlossen sein.

Für eine effiziente Strahlungseinkopplung wird vorgeschlagen, dass wenigstens eine Strahlungsquelle zur Abgabe elektromagnetischer Strahlung in Richtung auf den Brennkammerboden zu angeordnet ist.

Beispielsweise kann dafür vorgesehen sein, dass wenigstens eine Strahlungsquelle zur Abgabe elektromagnetischer Strahlung mit einer im Wesentlichen in Richtung der Gehäuselängsachse auf den Brennkammerboden zu orientierten Hauptstrahlungsrichtung angeordnet ist. Bei einer die Positionierung der Strahlungsquelle näher an der Brennkammer zugelassenen Ausgestaltung kann wenigstens eine Strahlungsquelle zur Abgabe elektromagnetischer Strahlung mit einer bezüglich der Gehäuselängsachse angewinkelt auf den Brennkammerboden zu orientierten Hauptstrahlungsrichtung angeordnet sein.

Bei einer weiteren alternativen Ausgestaltung wird vorgeschlagen, dass wenigstens eine Strahlungsquelle zur Abgabe elektromagnetischer Strahlung mit im Wesentlichen orthogonal zu der Gehäuselängsachse orientierter Hauptstrahlungsrichtung angeordnet ist.

Eine zum Vermeiden einer Beeinträchtigung der Abgasströmung in der Brennkammer vorteilhafte Ausgestaltung kann vorsehen, dass wenigstens eine Strahlungsquelle zur Abgabe elektromagnetischer Strahlung in Richtung vom Brennkammerboden weg angeordnet ist.

Insbesondere dann, wenn bei derartiger Ausgestaltung auch das Verdampfermedium durch die elektromagnetische Strahlung erwärmt werden soll, kann eine Reflektoranordnung zum Reflektieren von von der wenigstens einen Strahlungsquelle abgegebener elektromagnetischer Strahlung in Richtung auf das Verdampfermedium oder/und wenigstens einen Absorptionskörper zu vorgesehen sein.

Für eine effiziente Ausnutzung der in die Brennkammer eingekoppelten elektromagnetischen Strahlung wird vorgeschlagen, dass wenigstens eine Strahlungsquelle zur Abgabe von elektromagnetischer Strahlung mit im Wesentlichen auf wenigstens einen Absorptionskörper zu gerichteter Hauptstrahlungsrichtung angeordnet ist.

Wenigstens ein Absorptionskörper kann mit Siliziumcarbid-(SiC)-Material aufgebaut sein, was zu einer effizienten Erwärmung beitragen kann, da erfindungsgemäß wenigstens eine Strahlungsquelle zur Abgabe elektromagnetischer Strahlung mit einer Frequenz im Bereich von 300 MHz - 300 GHz ausgebildet ist.

Ferner betrifft die Erfindung ein Fahrzeugheizgerät, umfassend eine erfindungsgemäß aufgebaute Brennkammerbaugruppe, ferner umfassend eine Verbrennungsluftzuführanordnung zum Zuführen von Verbrennungsluft zu der Brennkammer sowie eine Brennstoffzuführanordnung zum Zuführen von flüssigem Brennstoff zu dem Verdampfermedium.

Die vorliegende Erfindung wird nachfolgend mit Bezug auf die beiliegenden Figuren detailliert beschrieben. Es zeigt:
- Fig. 1: ein Fahrzeugheizgerät in prinzipartiger Darstellung;
- Fig. 2: eine der Fig. 1 entsprechende Darstellung einer alternativen Ausgestaltungsart eines Fahrzeugheizgeräts;
- Fig. 3: eine der Fig. 1 entsprechende Darstellung einer alternativen Ausgestaltungsart eines Fahrzeugheizgeräts;
- Fig. 4: eine der Fig. 1 entsprechende Darstellung einer alternativen Ausgestaltungsart eines Fahrzeugheizgeräts.

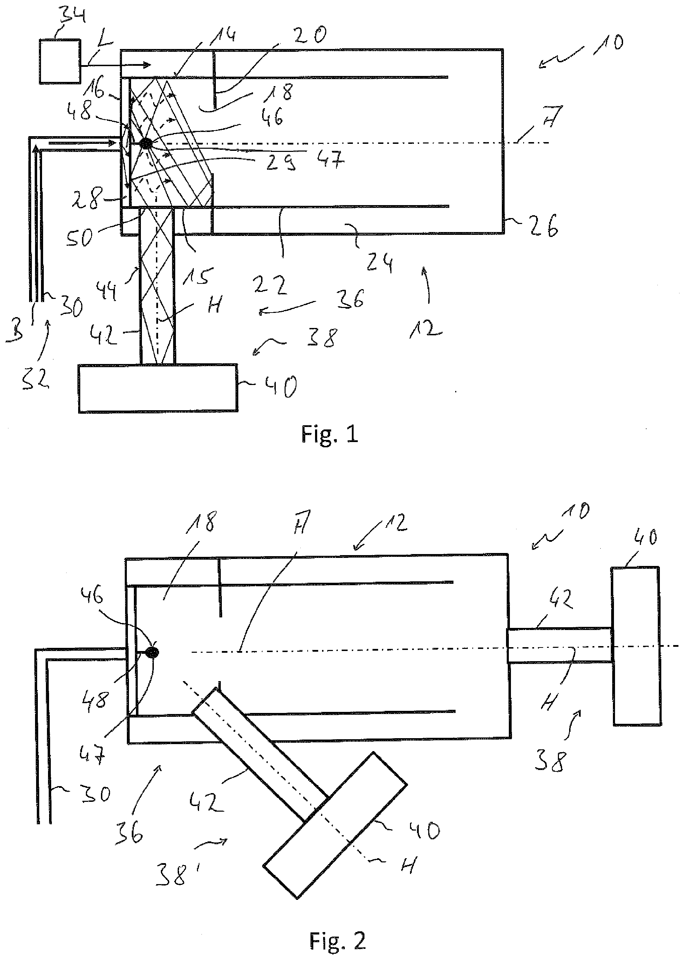

In Fig. 1 ist ein in prinzipartiger Weise dargestelltes Fahrzeugheizgerät allgemein mit 10 bezeichnet. Das Heizgerät 10 umfasst eine Brennkammerbaugruppe 12 mit einem allgemein mit 14 bezeichneten Brennkammergehäuse. Das Brennkammergehäuse 14 ist mit einer eine Gehäuselängsachse A umgebenden und in Richtung der Gehäuselängsachse L langgestreckten Umfangswand 15 und einer an die Umfangswand 15 anschließenden Bodenwand 16 aufgebaut. Die Umfangswand 15 und die Bodenwand 16 umgrenzen eine Brennkammer 18, die über eine Flammblende 20 bzw. die darin ausgebildete Öffnung zu einem von einem Flammrohr 22 umgebenen Raumbereich offen ist. Das Flammrohr 22 schließt an die Umfangswand 15 an und kann beispielsweise damit integral ausgebildet sein. An einem axial offenen Ende des Flammrohrs 22 kann in der Brennkammer 18 entstehendes Verbrennungsabgas aus dem Flammrohr 22 austreten und wird in einen Abgasrückströmraum 24 umgeleitet, über welchen es zu einem nicht dargestellten Abgasauslass strömen kann. Der Abgasrückströmraum 24 kann nach außen von einem Wärmetauschergehäuse 26 umgrenzt sein, das an seiner vom Abgasrückströmraum 24 abgewandten Außenseite von dem zu erwärmenden Medium, beispielsweise einer Flüssigkeit, umströmbar ist.

Im dargestellten Ausgestaltungsbeispiel der nach dem Prinzip eines Verdampferbrenners aufgebauten Brennkammerbaugruppe 12 ist an der Bodenwand 16 ein poröses Verdampfermedium 28 angeordnet. Eine Brennstoffzuführleitung 30 einer allgemein mit 32 bezeichneten Brennstoffzuführanordnung mündet im Bereich der Bodenwand 16 in das Brennkammergehäuse 12 ein. Der von einer Brennstoffpumpe, beispielsweise Dosierpumpe, der Brennstoffzuführanordnung 32 in flüssiger Form zugeführte Brennstoff B tritt im Bereich der Bodenwand 16 in das poröse Verdampfermedium 28 ein und wird, unterstützt durch eine durch die Porosität des Verdampfermediums 28 generierten Kapillarförderwirkung, im Innenvolumenbereich des Verdampfermediums 28 verteilt.

Die für die Verbrennung erforderliche Verbrennungsluft L wird durch eine Verbrennungsluftzuführanordnung 34, beispielsweise ein Gebläse, wie z. B. Seitenkanalgebläse, in die Brennkammer 18 eingeleitet. Hierfür können beispielsweise in der Umfangswand 15 vorgesehene Öffnungen genutzt werden. Die in die Brennkammer 18 eingeleitete Verbrennungsluft L vermischt sich in der Brennkammer 18 mit dem als Brennstoffdampf aus dem Verdampfermedium 18 austretenden Brennstoff B und stellt mit diesem somit ein zündfähiges Gemisch bereit.

Es ist darauf hinzuweisen, dass vorangehend der Aufbau einer Brennkammerbaugruppe bzw. eines Fahrzeugheizgeräts nur hinsichtlich prinzipieller Aspekte erläutert wurde. Es ist selbstverständlich, dass dieser Aufbau in verschiedenster Weise variiert werden kann.

Um die Abdampfung von Brennstoff B aus dem Verdampfermedium 28 zu unterstützen bzw. die zum Zünden des Gemisches aus Brennstoff B und Verbrennungsluft L erforderlichen hohen Temperaturen im Bereich der Brennkammer 18 bereitzustellen, ist eine allgemein mit 36 bezeichnete Heiz/Zünd-Anordnung vorgesehen. Die Heiz/Zünd-Anordnung 36 umfasst eine Strahlungsquelle 38 zur Erzeugung bzw. Abgabe elektromagnetischer Strahlung in die Brennkammer 18. Die Strahlungsquelle 38 wiederum umfasst einen die Strahlung erzeugenden Sender 40 sowie eine im dargestellten Ausgestaltungsbeispiel als Hohlrohr 42 ausgebildete Einstrahleinheit 44. Wie in Fig. 1 dargestellt, breitet sich die in Form eines divergenten Strahlungskegels von der Strahlungsquelle 40 abgegebene elektromagnetische Strahlung im Inneren des Hohlrohrs 42 im Wesentlichen in Richtung einer im dargestellten Beispiel zur Gehäuselängsachse A orthogonalen, im Wesentlichen auch einer Erstreckungsrichtung des Hohlrohrs 42 entsprechenden Hauptstrahlungsrichtung H aus, ggf. unterstützt durch eine Reflexion an der Innenoberfläche des Hohlrohrs 42. Die Strahlung tritt dann in die Brennkammer 18 ein und wird zum Teil auch an den diese begrenzenden Oberflächen reflektiert.

In der Brennkammer 18 ist ein Absorptionskörper 46 beispielsweise über eine Trägerstruktur 48 an der Bodenwand 16 getragen. Der Absorptionskörper 46 stellt einen Zündkörper 47 bereit und ist so positioniert, dass die Strahlungshauptrichtung H auf diesen zu gerichtet ist. Dies bedeutet, dass die vom Sender 40 abgegebene Strahlung oder zumindest ein großer Teil dieser Strahlung auf den Absorptionskörper 46 auftrifft und von diesem absorbiert wird. Dies führt zur Erwärmung des Absorptionskörpers 46, insbesondere auf derart hohe Temperaturen, dass einerseits das in der Brennkammer 18 gebildete Gemisch aus Brennstoff und Verbrennungsluft gezündet wird. Andererseits wird durch den auch nahe am Verdampfermedium 28 positionierten Absorptionskörper 46 Wärme auf das Verdampfermedium 28 übertragen, wodurch die Brennstoffabdampfung unterstützt wird.

Der Absorptionskörper 46 ist in Abstimmung auf die vom Sender 40 abgegebene elektromagnetische Strahlung mit einem Material aufgebaut, welches zur Absorption dieser Strahlung gut geeignet ist. Wird beispielsweise ein Sender 40 verwendet, welcher erfindungsgemäß Strahlung in einem Frequenzbereich von 300 MHz bis 300 GHz, beispielsweise etwa 2,45 GHz, abgibt, kann der Absorptionskörper 46 aus Siliziumcarbid (SiC) aufgebaut sein oder einem Material, das Siliziumcarbid enthält oder in welches Partikel aus Siliziumkarbid eingebettet sind.

Um einerseits den Austritt der vom Sender 40 abgegebenen Strahlung in Richtung Brennkammer 18 zuzulassen, andererseits jedoch zu verhindern, dass das in der Brennkammer 18 gebildete Gemisch aus Brennstoff und Verbrennungsluft oder/und das in der Brennkammer 18 entstehende Verbrennungsabgas über das Hohlrohr 42 zum Sender 40 gelangt, kann das Hohlrohr 42 beispielsweise in seinem an die Brennkammer 18 angrenzenden Bereich durch ein strahlungsdurchlässiges Abschlusselement 50 abgeschlossen sein. Dieses kann beispielsweise aus Quarzglas aufgebaut sein.

Alternativ oder zusätzlich zu der Bereitstellung des in Fig. 1 dargestellten Absorptionskörpers 46 bzw. Zündkörpers 47 kann das Verdampfermedium 28 als Absorptionskörper 29 genutzt werden. Dazu kann das Verdampfermedium 28 mit die vom Sender 40 abgegebene Strahlung absorbierendem Material aufgebaut sein oder Partikel aus diesem Material als Einbettungspartikel enthalten. Insbesondere kann zum Bereitstellen der porösen Struktur in diesem Falle das einen Absorptionskörper 29 bereitstellende Verdampfermedium 28 mit offenporigem, geschäumtem Siliziumcarbid aufgebaut sein. Auch bei der in Fig. 1 dargestellten Anordnung, bei welcher die Hauptstrahlungsrichtung H näherungsweise orthogonal zur Gehäuselängsachse A und somit näherungsweise parallel zu der der Brennkammer 18 zugewandten Oberfläche des Verdampfermedium 28 ist, gelangt die aus dem Hohlrohr 42 austretende Strahlung direkt oder durch Reflexion auch in den Bereich des Verdampfermediums 28 und kann somit von diesem absorbiert werden. Es wird damit eine im Wesentlichen homogene Erwärmung des Verdampfermediums 28 und eine entsprechend homogene Brennstoffabdampfung in die Brennkammer 18 erreicht.

Die Fig. 2 zeigt alternative Positionierungen der Strahlungsquelle 38 bezüglich des Brennkammergehäuses 14. So ist eine der in Fig. 2 dargestellten Strahlungsquellen 38, 38' so positioniert, dass deren Strahlungshauptrichtung H näherungsweise der Erstreckungsrichtung der Gehäuselängsachse A entspricht, so dass die vom Sender 40 abgegebene Strahlung im Wesentlichen auf die Bodenwand 16 bzw. das daran vorgesehene Verdampfermedium 28 zu gerichtet ist. Dies gewährleistet eine noch gleichmäßigere Beaufschlagung des Verdampfermediums 28 mit der vom Sender 40 abgegebenen Strahlung, so dass in Fig. 2 auf Grund der durch das Verdampfermedium 28 bereitgestellten Funktionalität eines Absorptionskörpers 29 der dargestellte Absorptionskörper 46 entfallen kann und auch die Funktionalität zum Zünden des in der Brennkammer 18 bereitgestellten Gemisches aus Verbrennungsluft und Brennstoff durch das Verdampfermedium 28 bereitgestellt werden kann.

Mit der Strahlungsquelle 38' zeigt die Fig. 2 eine weitere alternative Positionierung, bei welcher die Strahlungsquelle 38 so orientiert ist, dass deren Hauptstrahlungsrichtung H zur Gehäuselängsachse A geneigt ist, so dass gleichwohl aber, sowie auch bei der Strahlungsquelle 38 in Fig. 2, die in der jeweiligen Hauptstrahlungsrichtung H abgegebene elektromagnetische Strahlung auf den Absorptionskörper 46 bzw. das Verdampfermedium 28 zu gerichtet ist und somit effizient zur Erwärmung des Absorptionskörpers 46 oder/und des Verdampfermediums 28 genutzt werden kann.

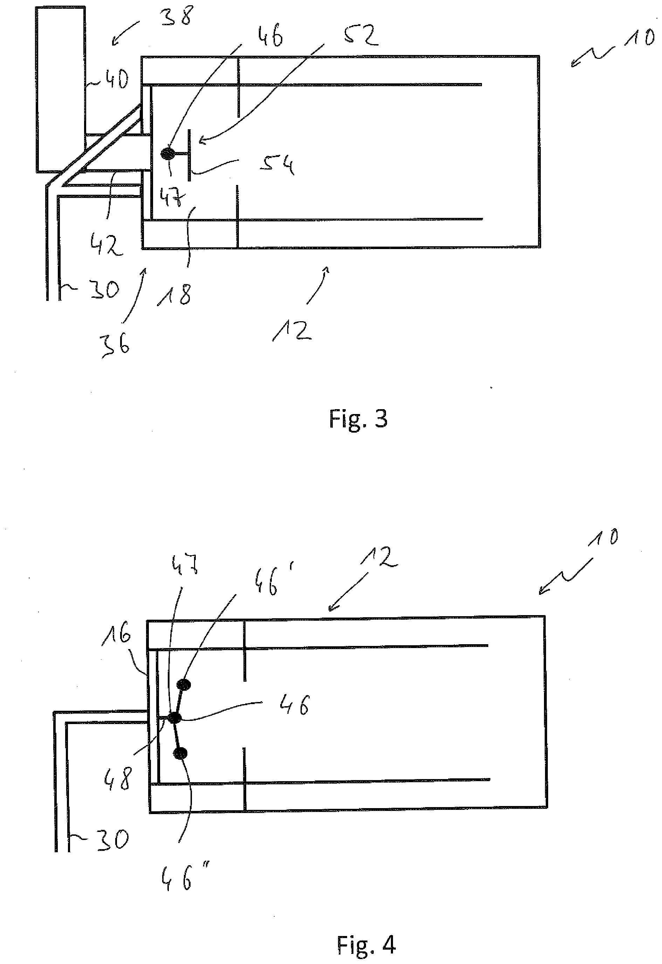

Eine weitere alternative Ausgestaltung ist in Fig. 3 gezeigt. Hier ist die Strahlungsquelle 38 so positioniert, dass über deren Einstrahleinheit 44 bzw. das Hohlrohr 42 Strahlung im Bereich der Bodenwand 16 bzw. des Verdampfermediums 28 in die Brennkammer 18 eingeleitet wird, und zwar in Richtung von der Bodenwand 16 weg. Der Öffnung des Hohlrohrs 42 liegt einerseits der Absorptionskörper 46 gegenüber und liegt andererseits eine beispielsweise auch über die Trägeranordnung 48 getragene Reflektoranordnung 52 gegenüber. Die aus dem Hohlrohr 42 in Richtung Brennkammer eingestrahlte elektromagnetische Strahlung trifft somit einerseits auf den Absorptionskörper 46 auf und wird zum Teil von diesem absorbiert, trifft andererseits zum Teil auf die Reflektoranordnung 52 auf und wird von dieser sowohl in Richtung zum Absorptionskörper 46, als auch in Richtung zum Verdampfermedium 28 reflektiert. Auch bei dieser Ausgestaltung kann somit nicht nur durch den Absorptionskörper 46, sondern auch durch das Verdampfermedium 28 Strahlung absorbiert und in Wärme umgewandelt werden, um einerseits die Brennstoffabdampfung zu unterstützen, andererseits die für das Zünden erforderliche hohe Temperatur bereitzustellen.

Die Reflektoranordnung 52 kann beispielsweise ein mit reflektierendem Material, wie z. B. Metallmaterial, aufgebauten Reflektor 54 umfassen, der, abgestimmt auf die verschiedenen Funktionalitäten, auch so geformt sein kann, dass die aus dem Hohlrohr 42 austretende elektromagnetische Strahlung dorthin reflektiert wird, wo sie genutzt werden soll. Soll beispielsweise primär der Absorptionskörper 46 durch Strahlung erwärmt werden, so kann der Reflektor 54 nach Art eines Parabolspiegels aufgebaut sein, bei welchem der Absorptionskörper 46 im Brennpunkt positioniert ist. Soll eine möglichst gleichmäßige Abstrahlung bzw. Reflexion auch in Richtung zum Verdampfermedium 28 hin erfolgen, kann der Reflektor 54 mit einer in Richtung von der Bodenwand 16 weg gekrümmten Reflexionsoberfläche aufgebaut sein.

Die Fig. 4 veranschaulicht einen Aufbau, bei welchem mehrere Absorptionskörper 46, 46', 46" in der Brennkammer 18 angeordnet sind und aneinander bzw. am Brennkammergehäuse 14, insbesondere der Bodenwand 16, über die Trägeranordnung 48 getragen sind. Durch das Bereitstellen mehrerer derartiger Absorptionskörper 46, 46', 46" in der Brennkammer 18 wird es möglich, an mehreren Bereichen gleichzeitig durch Erwärmung der Absorptionskörper 46, 46', 46" sehr hohe Temperaturen bereitzustellen, so dass eine schnellere Zündung bzw. eine gleichmäßigere Flammausbreitung in der Startphase gewährleistet werden kann. Es ist selbstverständlich, dass diese Ausgestaltung mit einer Mehrzahl von Absorptionskörpern 46, 46', 46" auch bei den vorangehend beschriebenen Ausgestaltungsformen zum Einsatz kommen kann.

Bei dem erfindungsgemäßen Aufbau einer Brennkammer wird eine berührungslose Erwärmung derjenigen Systembereiche gewährleistet, welche die Abdampfung von Brennstoff unterstützen sollen bzw. an welchen die zum Starten der Verbrennung erforderlichen hohen Zündtemperaturen bereitgestellt werden sollen. Die Zuführung elektrischer Leitungen oder das Positionieren vergleichsweise groß bauender Komponenten, wie z. B. eines Glühstifts, im Inneren der Brennkammer sind daher nicht erforderlich.

Der bzw. die in der Brennkammer zu positionierenden Absorptionskörper können so gestaltet werden, dass sie einerseits eine effiziente thermische Wechselwirkung mit dem diese umgebenden Gemisch aus Brennstoff und Verbrennungsluft gewährleisten, andererseits die im Inneren der Brennkammer erzeugten Strömungen weitestgehend nicht beeinträchtigen. Beispielsweise können die Absorptionskörper bzw. Zündkörper mit kugelartiger oder tropfenartiger Gestalt ausgestaltet sein. Da die zum Bereitstellen der hohen Temperaturen genutzte Energiequelle, also der Sender, außerhalb des thermisch stark belasteten Bereichs liegt, besteht auch keine über die Betriebslebensdauer einer derartigen Brennkammerbaugruppe hinweg auftretende Beeinträchtigung der Zünd- bzw. Erwärmungsfunktionalität.

Der erfindungsgemäße Einsatz elektromagnetischer Strahlung mit einer Frequenz im Bereich von 300 MHz - 300 GHz zum Erzeugen der für die Brennstoffabdampfung bzw. das Zünden erforderlichen Temperaturen unterstützt nicht nur eine homogenere Brennstoffabdampfung durch gleichmäßigere Erwärmung insbesondere des Verdampfermediums, was auch zu einer thermischen Entlastung desselben beiträgt, sondern unterstützt auch das Abbrennen von im Verbrennungsbetrieb möglicherweise entstehenden Ablagerungen, insbesondere von Rußablagerungen im Bereich der die Brennkammer umgrenzenden Wandungen bzw. Bauteile.

Eine gleichmäßige Abdampfung von Brennstoff kann weiter dadurch unterstützt werden, dass, wie dies in Fig. 3 veranschaulicht ist, der über die Brennstoffzuführanordnung zugeführte Brennstoff über mehrere Brennstoffleitungen bzw. Zweigleitungen an verschiedenen Positionen in das Verdampfermedium eingespeist wird. Dies mindert auch den Schwerkrafteinfluss auf die Verteilung des flüssigen Brennstoffs im Innenvolumenbereich des Verdampfermediums.

## Patentansprüche

1. Brennkammerbaugruppe für ein brennstoffbetriebenes Fahrzeugheizgerät, umfassend ein Brennkammergehäuse (14), eine in dem Brennkammergehäuse (14) gebildete Brennkammer (18), ein Verdampfermedium (28) zur Aufnahme von flüssigem Brennstoff und zur Abgabe von Brennstoffdampf in die Brennkammer (18), eine Heiz/Zünd-Anordnung (36) zum Erwärmen des Verdampfermediums (28) oder/und Zünden eines in der Brennkammer (18) gebildeten Gemisches aus Brennstoff und Verbrennungsluft, wobei die Heiz/Zünd-Anordnung (38) wenigstens eine Strahlungsquelle (38) zur Abgabe elektromagnetischer Strahlung in die Brennkammer (18) und wenigstens einen Absorptionskörper (29, 46) zur Absorption von durch die wenigstens eine Strahlungsquelle (38) in die Brennkammer (18) abgegebener elektromagnetischer Strahlung umfasst, **dadurch gekennzeichnet, dass** wenigstens eine Strahlungsquelle (38) zur Abgabe elektromagnetischer Strahlung in die Brennkammer (18) zur Abgabe von elektromagnetischer Strahlung mit einer Frequenz im Bereich von 300 MHz - 300 GHz ausgebildet ist.

2. Brennkammerbaugruppe nach Anspruch 1, **dadurch gekennzeichnet, dass** das Brennkammergehäuse (14) eine eine Gehäuselängsachse (A) umgebende und in Richtung der Gehäuselängsachse (A) sich erstreckende Umfangswand (15) und einen an die Umfangswand (15) anschließenden und die Brennkammer (18) in Richtung der Gehäuselängsachse (A) begrenzenden Brennkammerboden (16) umfasst, und dass das Verdampfermedium (28) den Brennkammerboden (16) oder/und die Umfangswand (15) an einer der Brennkammer (18) zugewandten Seite wenigstens bereichsweise überdeckend angeordnet ist.

3. Brennkammerbaugruppe nach Anspruch 1 oder 2, **dadurch gekennzeichnet, dass** das Verdampfermedium (28) einen Absorptionskörper (29) zur Absorption von durch die wenigstens eine Strahlungsquelle (38) in die Brennkammer (18) abgegebener elektromagnetischer Strahlung bereitstellt.

4. Brennkammerbaugruppe nach einem der vorangehenden Ansprüche, **dadurch gekennzeichnet, dass** in der Brennkammer (18) in Abstand zu dem Verdampfermedium (28) wenigstens ein einen Absorptionskörper (46) zur Absorption von durch die wenigstens eine Strahlungsquelle (38) in die Brennkammer (18) abgegebener elektromagnetischer Strahlung bereitstellender Zündkörper (47) vorgesehen ist.

5. Brennkammerbaugruppe nach einem der vorangehenden Ansprüche, **dadurch gekennzeichnet, dass** wenigstens eine Strahlungsquelle (38) zur Abgabe elektromagnetischer Strahlung in die Brennkammer (18) einen Sender (40) und eine Einstrahleinheit (44) zum Einstrahlen von von dem Sender (40) abgegebener elektromagnetischer Strahlung in die Brennkammer (18) umfasst.

6. Brennkammerbaugruppe nach Anspruch 5, **dadurch gekennzeichnet, dass** die Einstrahleinheit (44) ein Hohlrohr (42) umfasst, wobei das Hohlrohr (42) zur Abgabe der vom Sender (40) abgegebenen elektromagnetischen Strahlung in die Brennkammer (18) offen ist.

7. Brennkammerbaugruppe nach Anspruch 2 oder einem der vorangehenden Ansprüche, sofern auf Anspruch 2 rückbezogen, **dadurch gekennzeichnet, dass** wenigstens eine Strahlungsquelle (38) zur Abgabe elektromagnetischer Strahlung in die Brennkammer (18) zur Abgabe elektromagnetischer Strahlung in Richtung auf den Brennkammerboden (16) zu angeordnet ist.

8. Brennkammerbaugruppe nach Anspruch 7, **dadurch gekennzeichnet, dass** wenigstens eine Strahlungsquelle (38) zur Abgabe elektromagnetischer Strahlung in die Brennkammer (18) zur Abgabe elektromagnetischer Strahlung mit einer im Wesentlichen in Richtung der Gehäuselängsachse (A) auf den Brennkammerboden (16) zu orientierten Hauptstrahlungsrichtung (H) angeordnet ist.

9. Brennkammerbaugruppe nach Anspruch 7 oder 8, **dadurch gekennzeichnet, dass** wenigstens eine Strahlungsquelle (38') zur Abgabe elektromagnetischer Strahlung in die Brennkammer (18) zur Abgabe elektromagnetischer Strahlung mit einer bezüglich der Gehäuselängsachse (A) angewinkelt auf den Brennkammerboden (16) zu orientierten Hauptstrahlungsrichtung (H) angeordnet ist.

10. Brennkammerbaugruppe nach Anspruch 2 oder einem der vorangehenden Ansprüche, sofern auf Anspruch 2 rückbezogen, **dadurch gekennzeichnet, dass** wenigstens eine Strahlungsquelle (38) zur Abgabe elektromagnetischer Strahlung in die Brennkammer (18) zur Abgabe elektromagnetischer Strahlung mit im Wesentlichen orthogonal zu der Gehäuselängsachse (A) orientierter Hauptstrahlungsrichtung (H) angeordnet ist.

11. Brennkammerbaugruppe nach Anspruch 2 oder einem der vorangehenden Ansprüche, sofern auf Anspruch 2 rückbezogen, **dadurch gekennzeichnet, dass** wenigstens eine Strahlungsquelle (38) zur Abgabe elektromagnetischer Strahlung in die Brennkammer (18) zur Abgabe elektromagnetischer Strahlung in Richtung vom Brennkammerboden (16) weg angeordnet ist.

12. Brennkammerbaugruppe nach einem der vorangehenden Ansprüche, **dadurch gekennzeichnet, dass** eine Reflektoranordnung (52) zum Reflektieren von von der wenigstens einen Strahlungsquelle (38) zur Abgabe elektromagnetischer Strahlung in die Brennkammer (18) abgegebener elektromagnetischer Strahlung in Richtung auf das Verdampfermedium (28) oder/und wenigstens einen Absorptionskörper (29, 46) zur Absorption von in die Brennkammer (18) abgegebener elektromagnetischer Strahlung zu vorgesehen ist.

13. Brennkammerbaugruppe nach einem der vorangehenden Ansprüche, **dadurch gekennzeichnet, dass** wenigstens eine Strahlungsquelle (38) zur Abgabe elektromagnetischer Strahlung in die Brennkammer (18) zur Abgabe von elektromagnetischer Strahlung mit im Wesentlichen auf wenigstens einen Absorptionskörper (29, 46) zur Absorption von durch die wenigstens eine Strahlungsquelle (38) in die Brennkammer (18) abgegebener elektromagnetischer Strahlung zu gerichteter Hauptstrahlungsrichtung (H) angeordnet ist.

14. Brennkammerbaugruppe nach einem der vorangehenden Ansprüche, **dadurch gekennzeichnet, dass** wenigstens ein Absorptionskörper (29, 46) zur Absorption von durch die wenigstens eine Strahlungsquelle (38) in die Brennkammer (18) abgegebener elektromagnetischer Strahlung mit Siliziumcarbid-Material aufgebaut ist.

15. Fahrzeugheizgerät, umfassend eine Brennkammerbaugruppe (12) nach einem der vorangehenden Ansprüche, ferner umfassend eine Verbrennungsluftzuführanordnung (34) zum Zuführen von Verbrennungsluft (L) zu der Brennkammer (18) sowie eine Brennstoffzuführanordnung (32) zum Zuführen von flüssigem Brennstoff (B) zu dem Verdampfermedium (28).

## Claims

1. Combustion chamber assembly unit for a fuel-operated vehicle heating device, comprising a combustion chamber housing (14), a combustion chamber (18) formed in the combustion chamber housing (14), an evaporator medium (28) for the absorption of liquid fuel and for the discharge of fuel vapor into the combustion chamber (18), a heating/ignition device (36) for heating the evaporator medium (28) or/and for igniting a mixture of fuel and combustion air formed in the combustion chamber (18), wherein the heating/ignition device (38) comprises at least one radiation source (38) for the emission of electromagnetic radiation into the combustion chamber (18), and at least one absorption body (29, 46) for the absorption of electromagnetic radiation emitted by the at least one radiation source (38) into the combustion chamber (18), **characterized in that** at least one radiation source (38) for the emission of electromagnetic radiation into the combustion chamber (18) is adapted for the emission of electromagnetic radiation with a frequency in the range of 300 MHz to 300 GHz.

2. Combustion chamber assembly unit in accordance with claim 1, **characterized in that** the combustion chamber housing (14) comprises a circumferential wall (15), which encloses a housing longitudinal axis (A) and extends in the direction of the housing longitudinal axis (A), and a combustion chamber bottom (16), which is adjacent to the circumferential wall (15) and defines the combustion chamber (18) in the direction of the housing longitudinal axis (A), and that the evaporator medium (28) is arranged overlapping the combustion chamber bottom (16) or/and the circumferential wall (15) in at least some areas on a side facing the combustion chamber (18).

3. Combustion chamber assembly unit in accordance with claim 1 or 2, **characterized in that** the evaporator medium (28) provides an absorption body (29) for the absorption of electromagnetic radiation emitted by the at least one radiation source (38) into the combustion chamber (18).

4. Combustion chamber assembly unit in accordance with one of the preceding claims, **characterized in that** at least one ignition body (47) providing an absorption body (46) for the absorption of electromagnetic radiation emitted by the at least one radiation source (38) into the combustion chamber (18) is provided at a spaced location from the evaporator medium (28) in the combustion chamber (18).

5. Combustion chamber assembly unit in accordance with one of the preceding claims, **characterized in that** at least one radiation source (38) for the emission of electromagnetic radiation into the combustion chamber (18) comprises a transmitter (40) and a radiation unit (44) for radiating electromagnetic radiation emitted by the transmitter (40) into the combustion chamber (18).

6. Combustion chamber assembly unit in accordance with claim 5, **characterized in that** the radiation unit (44) comprises a hollow pipe (42), wherein the hollow pipe (42) is open for the emission of the electromagnetic radiation emitted by the transmitter (40) into the combustion chamber (18).

7. Combustion chamber assembly unit in accordance with claim 2 or with one of the preceding claims, if referred back to claim 2, **characterized in that** at least one radiation source (38) for the emission of electromagnetic radiation into the combustion chamber (18) is arranged for the emission of electromagnetic radiation in the direction towards the combustion chamber bottom (16).

8. Combustion chamber assembly unit in accordance with claim 7, **characterized in that** at least one radiation source (38) for the emission of electromagnetic radiation into the combustion chamber (18) is arranged for the emission of electromagnetic radiation with a main direction of radiation (H) oriented towards the combustion chamber bottom (16) essentially in the direction of the housing longitudinal axis (A).

9. Combustion chamber assembly unit in accordance with claim 7 or 8, **characterized in that** at least one radiation source (38') for the emission of electromagnetic radiation into the combustion chamber (18) is arranged for the emission of electric radiation with a main direction of radiation (H) oriented towards the combustion chamber bottom (16) bent at an angle in relation to the housing longitudinal axis (A).

10. Combustion chamber assembly unit in accordance with claim 2 or with one of the preceding claims, if referred back to claim 2, **characterized in that** at least one radiation source (38) for the emission of electromagnetic radiation into the combustion chamber (18) is arranged for the emission of electromagnetic radiation with a main direction of radiation (H) oriented essentially at right angles to the housing longitudinal axis (A).

11. Combustion chamber assembly unit in accordance with claim 2 or with one of the preceding claims, if referred back to claim 2, **characterized in that** at least one radiation source (38) for the emission of electromagnetic radiation into the combustion chamber (18) is arranged for the emission of electromagnetic radiation in a direction away from the combustion chamber bottom (16).

12. Combustion chamber assembly unit in accordance with one of the preceding claims, **characterized in that** a reflector assembly (52) is provided for reflecting electromagnetic radiation emitted by the at least one radiation source (38) for the emission of electromagnetic radiation into the combustion chamber (18) in the direction towards the evaporator medium (28) or/and towards at least one absorption body (29, 46) for the absorption of electromagnetic radiation emitted into the combustion chamber (18).

13. Combustion chamber assembly unit in accordance with one of the preceding claims, **characterized in that** at least one radiation source (38) for the emission of electromagnetic radiation into the combustion chamber (18) is arranged for the emission of electromagnetic radiation with a main direction of radiation (H) directed essentially towards at least one absorption body (29, 46) for the absorption of electromagnetic radiation emitted by the at least one radiation source (18) into the combustion chamber (18).

14. Combustion chamber assembly unit in accordance with one of the preceding claims, **characterized in that** at least one absorption body (29, 46) for the absorption of electromagnetic radiation emitted by the at least one radiation source (38) into the combustion chamber (18) is made of silicon carbide material.

15. Vehicle heating device, comprising a combustion chamber assembly unit (12) in accordance with one of the preceding claims, further comprising a combustion air feed device (34) for feeding combustion air (L) to the combustion chamber (18) as well as a fuel feed device (32) for feeding liquid fuel (B) to the evaporator medium (28).

## Revendications

1. Unité d'assemblage de chambre de combustion pour un dispositif de chauffage de véhicule fonctionnant au carburant, comprenant un boîtier de chambre de combustion (14), une chambre de combustion (18) formée dans le boîtier de chambre de combustion (14), un milieu évaporateur (28) pour l'absorption de carburant liquide et pour la décharge de vapeur de carburant dans la chambre de combustion (18), un dispositif de chauffage/d'allumage (36) pour chauffer le milieu évaporateur (28) ou/et pour allumer un mélange de carburant et d'air de combustion formé dans la chambre de combustion (18), dans lequel le dispositif de chauffage/allumage (38) comprend au moins une source de rayonnement (38) pour l'émission de rayonnement électromagnétique dans la chambre de combustion (18), et au moins un corps d'absorption (29, 46) pour l'absorption du rayonnement électromagnétique émis par ladite au moins une source de rayonnement (38) dans la chambre de combustion (18), **caractérisé en ce qu'**au moins une source de rayonnement (38) pour l'émission de rayonnement électromagnétique dans la chambre de combustion (18) est arrangée pour l'émission d'un rayonnement électromagnétique avec une fréquence dans la plage de 300 MHz à 300 GHz.

2. Unité d'assemblage de chambre de combustion selon la revendication 1, **caractérisée en ce que** le boîtier de chambre de combustion (14) comprend une paroi circonférentielle (15), qui entoure un axe longitudinal de boîtier (A) et s'étend dans la direction de l'axe longitudinal de boîtier (A), et un fond de chambre de combustion (16), adjacent à la paroi circonférentielle (15) et qui délimite la chambre de combustion (18) dans la direction de l'axe longitudinal de boîtier (A), et **en ce que** le milieu évaporateur (28) est arrangé de manière à recouvrir le fond de chambre de combustion (16) et/ou la paroi circonférentielle (15) au moins dans certaines zones sur un côté tourné vers la chambre de combustion (18).

3. Unité d'assemblage de chambre de combustion selon la revendication 1 ou 2, **caractérisée en ce que** le milieu évaporateur (28) fournit un corps d'absorption (29) pour l'absorption du rayonnement électromagnétique émis par ladite au moins une source de rayonnement (38) dans la chambre de combustion (18).

4. Unité d'assemblage de chambre de combustion selon l'une des revendications précédentes, **caractérisée en ce qu'**au moins un corps d'allumage (47) fournissant un corps d'absorption (46) pour l'absorption du rayonnement électromagnétique émis par ladite au moins une source de rayonnement (38) dans la chambre de combustion (18) est prévu de manière espacée du milieu évaporateur (28) dans la chambre de combustion (18).

5. Unité d'assemblage de chambre de combustion selon l'une des revendications précédentes, **caractérisée en ce qu'**au moins une source de rayonnement (38) pour l'émission de rayonnement électromagnétique dans la chambre de combustion (18) comprend un émetteur (40) et une unité de rayonnement (44) pour rayonner le rayonnement électromagnétique émis par l'émetteur (40) dans la chambre de combustion (18).

6. Unité d'assemblage de chambre de combustion selon la revendication 5, **caractérisée en ce que** l'unité de rayonnement (44) comprend un tube creux (42), dans lequel le tube creux (42) est ouvert pour l'émission du rayonnement électromagnétique émis par l'émetteur (40) dans la chambre de combustion (18).

7. Unité d'assemblage de chambre de combustion selon la revendication 2 ou l'une des revendications précédentes, si l'on se réfère à la revendication 2, **caractérisée en ce qu'**au moins une source de rayonnement (38) pour l'émission de rayonnement électromagnétique dans la chambre de combustion (18) est arrangée pour l'émission de rayonnement électromagnétique dans la direction du fond de chambre de combustion (16).

8. Unité d'assemblage de chambre de combustion selon la revendication 7, **caractérisée en ce qu'**au moins une source de rayonnement (38) pour l'émission de rayonnement électromagnétique dans la chambre de combustion (18) est arrangée pour l'émission de rayonnement électromagnétique avec une direction principale de rayonnement (H) orientée vers le fond de chambre de combustion (16) essentiellement dans la direction de l'axe longitudinal de boîtier (A).

9. Unité d'assemblage de chambre de combustion selon la revendication 7 ou 8, **caractérisée en ce qu'**au moins une source de rayonnement (38') pour l'émission de rayonnement électromagnétique dans la chambre de combustion (18) est arrangée pour l'émission de rayonnement électromagnétique avec une direction principale de rayonnement (H) orientée vers le fond de chambre de combustion (16) inclinée par rapport à l'axe longitudinal de boîtier (A).

10. Unité d'assemblage de chambre de combustion selon la revendication 2 ou selon l'une des revendications précédentes, si l'on se réfère à la revendication 2, **caractérisée en ce qu'**au moins une source de rayonnement (38) pour l'émission de rayonnement électromagnétique dans la chambre de combustion (18) est arrangée pour l'émission de rayonnement électromagnétique avec une direction principale de rayonnement (H) orientée essentiellement perpendiculairement à l'axe longitudinal de boîtier (A).

11. Unité d'assemblage de chambre de combustion selon la revendication 2 ou selon l'une des revendications précédentes, si l'on se réfère à la revendication 2, **caractérisée en ce qu'**au moins une source de rayonnement (38) pour l'émission de rayonnement électromagnétique dans la chambre de combustion (18) est arrangée pour l'émission de rayonnement électromagnétique dans une direction opposée au fond de chambre de combustion (16).

12. Unité d'assemblage de chambre de combustion selon l'une des revendications précédentes, **caractérisée en ce qu'**un ensemble réflecteur (52) est prévu pour réfléchir le rayonnement électromagnétique émis par ladite au moins une source de rayonnement (38) pour l'émission de rayonnement électromagnétique dans la chambre de combustion (18) en direction du milieu évaporateur (28) ou/et vers au moins un corps d'absorption (29, 46) pour l'absorption du rayonnement électromagnétique émis dans la chambre de combustion (18).

13. Unité d'assemblage de chambre de combustion selon l'une des revendications précédentes, **caractérisée en ce qu'**au moins une source de rayonnement (38) pour l'émission de rayonnement électromagnétique dans la chambre de combustion (18) est arrangée pour l'émission de rayonnement électromagnétique avec une direction principale de rayonnement (H) dirigée essentiellement vers au moins un corps d'absorption (29, 46) pour l'absorption du rayonnement électromagnétique émis par ladite au moins une source de rayonnement (18) dans la chambre de combustion (18).

14. Unité d'assemblage de chambre de combustion selon l'une des revendications précédentes, **caractérisée en ce qu'**au moins un corps d'absorption (29, 46) pour l'absorption du rayonnement électromagnétique émis par ladite au moins une source de rayonnement (38) dans la chambre de combustion (18) est réalisé en matériau de carbure de silicium.

15. Dispositif de chauffage pour véhicule, comprenant une unité d'assemblage de chambre de combustion (12) selon l'une des revendications précédentes, comprenant en outre un dispositif d'alimentation en air de combustion (34) pour alimenter la chambre de combustion (18) en air de combustion (L) ainsi qu'un dispositif d'alimentation en carburant (32) pour alimenter le milieu évaporateur (28) en carburant liquide (B).
